# EUROPÄISCHE PATENTSCHRIFT

(11) **EP 0 537 475 B1**
(45) Veröffentlichungstag und Bekanntmachung des Hinweises auf die Patenterteilung: **17.04.1996**
(21) Anmeldenummer: 92115470.4
(22) Anmeldetag: 10.09.1992
(51) Int. Cl.: C01B 25/40

(54) **Verfahren zur Herstellung von Ammoniumpolyphosphat**
Process for the preparation of ammonium polyphosphate
Procédé de préparation de polyphosphate d'ammonium

(30) Priorität: 12.10.1991 DE 4133811
(43) Veröffentlichungstag der Anmeldung: 21.04.1993
(73) Patentinhaber: HOECHST AKTIENGESELLSCHAFT, D-65926 Frankfurt am Main (DE)
(72) Erfinder: Staffel, Thomas, Dr., W-5042 Erftstadt (DE); Becker, Wolfgang, Dr., W-5042 Erftstadt (DE); Neumann, Herbert, W-5010 Bergheim (DE)

(56) Entgegenhaltungen:
- EP-A- 0 446 676
- US-A- 3 978 195

## Beschreibung

Die vorliegende Erfindung betrifft ein Verfahren zur Herstellung von im wesentlichen wasserunlöslichem, kettenförmigem Ammoniumpolyphosphat, wobei in einer ersten Stufe Ammoniumorthophosphat und Phosphorpentoxid in Gegenwart von gasförmigem Ammoniak in einem in seinem Innenraum mit Misch-, Knet- und Zerkleinerungswerkzeugen versehenen Reaktor solange umgesetzt werden, bis der Antriebsmotor des Reaktors in seinem Stromaufnahme-Zeit-Diagramm den zweiten Strompeak durchläuft und wobei in einer zweiten Stufe das aus dem Reaktor ausgeschleuste Material auf einen Tellertrockner aufgegeben wird.

Aus der US-PS 3 978 195 ist ein Verfahren zur Herstellung von im wesentlichen wasserunlöslichen, kettenförmigen Ammoniumpolyphosphaten bekannt, bei welchem äquimolare Mengen von Ammoniumorthophosphat und Phosphorpentoxid in Gegenwart von Ammoniak bei Temperaturen zwischen 170 und 350 °C in einem mit Mischwerkzeugen versehenen Reaktor unter ständigem Mischen, Kneten und Zerkleinern zur Reaktion gebracht werden, wobei in der ersten Phase bei teigigem Reaktionsgemisch mit relativ geringer Drehzahl und in einer zweiten Phase nach Entstehen eines feinteiligen Produktes mit hoher Drehzahl gedreht wird.

Bei der in der DE-OS 40 06 362 beschriebenen Anlage zur Herstellung von im wesentlichen wasserunlöslichen, kettenförmigen Ammoniumpolyphosphaten aus Ammoniumorthophosphat, Phosphorpentoxid und Ammoniak ist die Austragsleitung des in seinem Innenraum Misch-, Knet- und Zerkleinerungswerkzeuge aufweisenden Reaktors mit einem Mischapparat materialströmungsmäßig verbunden, wobei als Mischapparat ein Drehrohrofen, ein Tellertrockner, ein Wirbelschichtreaktor oder ein Knetmischer dienen können. Dabei wird ein in der Austragsleitung befindliches Austragsorgan dann geöffnet, wenn im Stromaufnahme-Zeit-Diagramm des Antriebsmotors des Reaktors der zweite Zeitpeak durchlaufen ist.

Die EP-A-0 446 676 beschreibt eine Anlage zur Herstellung von Ammoniumpolyphosphat, die aus einem Reaktor mit drehbaren Misch-, Knet- und Zerkleinerungswerkzeugen besteht, wobei die Austragsleitung des Reaktors mit einem Mischapparat materialströmungsmäßig verbunden ist, in der Austragsleitung ein Austragsorgan angeordnet ist und das Austragsorgan von der Stromaufnahme des Antriebsmotors des Reaktors gesteuert wird, wobei der Mischapparat unter anderem ein Tellertrockner sein kann.

Nachteilig bei den bekannten Verfahren ist jedoch ihr hoher Ammoniakverbrauch und die komplizierte Prozeßführung.

Es war daher Aufgabe der Erfindung, ein Verfahren zur Herstellung von Ammoniumpolyphosphat zur Verfügung zu stellen, das bei ökonomischer Arbeitsweise möglichst wenig ammoniakhaltiges Gas verbraucht und das eine möglichst optimale Prozeßführung aufweist.

Im einzelnen betrifft die vorliegende Erfindung somit ein Verfahren zur Herstellung von im wesentlichen wasserunlöslichen, kettenförmigen Ammoniumpolyphosphaten, wobei in einer ersten Stufe Ammoniumorthophosphat und Phosphorpentoxid in Gegenwart von gasförmigem Ammoniak in einem Misch-, Knet- und Zerkleinerungswerkzeuge aufweisenden Reaktor umgesetzt werden und wobei in einer zweiten Stufe das aus dem Reaktor ausgeschleuste Material auf einen Tellertrockner aufgegeben wird und dort 35 bis 70 Minuten verweilt, wobei die Heizteller des Tellertrockners auf Temperaturen von 240 bis 300 °C gehalten werden, dadurch gekennzeichnet, daß das Material die Teller des Tellertrockners mit einer Schichtdicke von 5 bis 20 mm belegt; daß der untere Kühlteller des Tellertrockners Temperaturen von 5 bis 45 °C aufweist; daß ständig ammoniakhaltiges Gas durch den Tellertrockner geführt wird; daß das aus dem Tellertrockner austretende ammoniakhaltige Gas durch Kondensieren des in ihm enthaltenen Wasserdampfes von diesem befreit wird; daß das ammoniakhaltige Gas vor seinem Eintritt in den Tellertrockner auf Temperaturen von 100 bis 300 °C aufgeheizt wird und daß das Verhältnis der Gesamtoberfläche der Heizteller (in m²) zu der den Tellertrockner durchströmenden Menge ammoniakhaltigen Gases (in m³/h) 1 : (5 bis 15) beträgt.

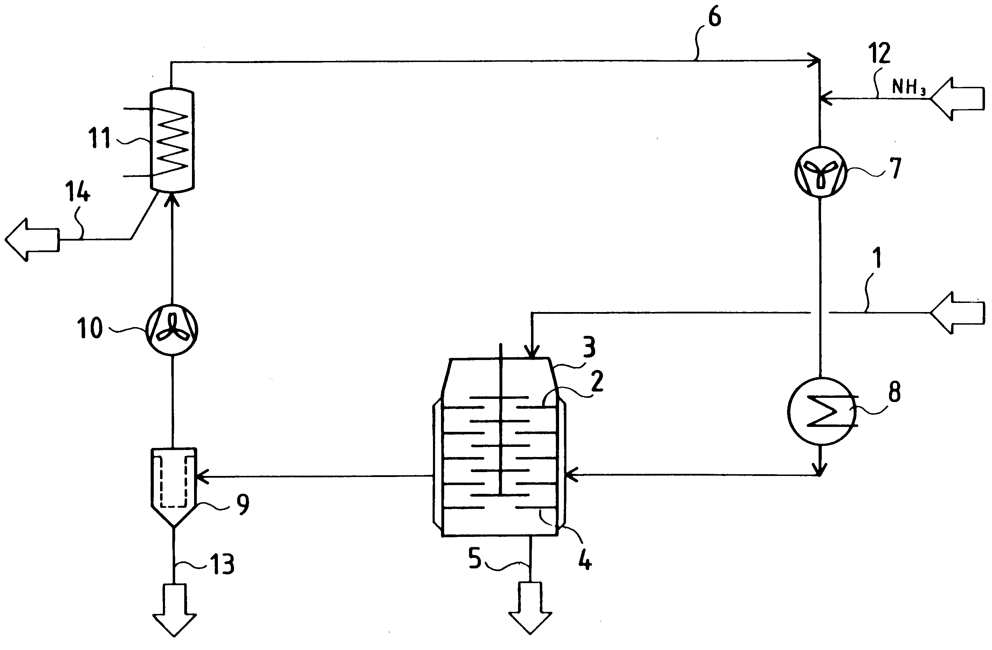

Das erfindungsgemäße Verfahren kann weiterhin wahlweise auch noch dadurch ausgestaltet sein, daß
a) das Material 45 bis 60 Minuten im Tellertrockner verweilt;
b) das ammoniakhaltige Gas im Querstrom durch den Tellertrockner geführt wird (vergl. die Figur):
c) das ammioniakhaltige Gas im Gegenstrom durch den Tellertrockner geführt wird;
d) das ammoniakhaltige Gas im Gleichstrom durch den Tellertrockner geführt wird;
e) dem vom Wasserdampf befreiten ammoniakhaltigen Gas zusätzlich Ammoniak beigemischt wird;
f) das Verhältnis der Gesamtoberfläche der Hersteller (in m²) zu der den Tellertrockner durchströmenden Menge ammoniakhaltigen Gases (in m³/h) 1 : (8 bis 12) beträgt.

In der beigefügten Zeichnung ist eine Anlage zur Durchführung des erfindungsgemäßen Verfahrens schematisch dargestellt.
Aus dem Reaktor ausgeschleustes Material gelangt über eine Zuführungsleitung 1 auf den oberen Heizteller 2 des Tellertrockners 3, während das im Tellertrockner behandelte Material zuletzt auf den Kühlteller 4 gelangt und dann über das Austragsrohr 5 als Produkt entnehmbar ist. In der Kreislaufführung 6 für ammoniakhaltiges Gas sind strömungsmäßig hintereinander ein erster Ventilator 7, eine Heizeinrichtung 8, der Tellertrockner 3, ein Filter 9, ein zweiter Ventilator 10 und ein Kondensator 11 angeordnet. Weiterhin mündet in die Kreislaufleitung 6 ein Ammoniakzuführungsrohr 12 ein. Schließlich geht vom Boden des Filters 9 ein Feststoffrohr 13 ab, während der Kondensator 11 mit einer Kondensatableitung 14 verbunden ist.

Spezifikationsgerechtes Ammoniumpolyphosphat ( ® Exolit 422) muß in 1o %iger wäßriger Suspension
einen pH-Wert von 5,5 ± 1 und
eine Säurezahl von max. 1 mg KOH/g
aufweisen und darf bei 25 °C höchstens 1o % wasserlösliche Anteile enthalten (vergl. den Prospekt der HOECHST AG:
" ® Exolit auf Ammoniumpolyphosphat-Basis: Für halogenfreie Flammschutzsysteme der Zukunft"; 1989).
In den folgenden Beispielen werden die erhaltenen Ammoniumpolyphosphate mit dem spezifikationsgerechten Material verglichen.

### Beispiel 1 (Vergleichsbeispiel)

In einen Tellertrockner mit sieben Heiztellern und einem Kühlteller wurden stündlich 5o kg eines krümeligen Materials eingetragen, welches durch Umsatz von Ammoniumorthophosphat und Phosphorpentoxid in Gegenwart von gasförmigem Ammoniak in einem mit Misch-, Knet- und Zerkleinerungswerkzeugen ausgestatteten Reaktor erhalten worden war. Die Schichtdicke des Materials auf den Tellern betrug 13 mm. Die Heizteller wurden auf einer Temperatur von etwa 27o °C gehalten, der Kühlteller wies eine Temperatur von 25 °C auf. Durch den Tellertrockner strömte 7o m³ ammoniakhaltiges Gas (mindestens 50 Volumen-% NH₃) pro Stunde, entsprechend einem Verhältnis von Telleroberfläche zu Gasmenge von 1 : 1o. Stündlich wurden 2 m³ frisches Ammoniak in die Kreislaufleitung eingespeist. Die Verweilzeit des Materials im Tellertrockner betrug 3o Minuten. Charakteristika aus vier Probenahmen des erhaltenen Ammoniumpolyphosphates sind der Tabelle 1 zu entnehmen.

**Tabelle 1**

| Nr. | pH-Wert | Säurezahl mg KOH/g | Wasserlöslicher Anteil % |
|---|---|---|---|
| 1 | 4,3 | 1,1 | 9,o |
| 2 | 4,4 | 1,3 | 8,8 |
| 3 | 4,7 | 1,1 | 7,9 |
| 4 | 4,4 | 1,2 | 8,3 |

Dieses Ammoniumpolyphosphat ist nicht spezifikationsgerecht.

### Beispiel 2 (gemäß der Erfindung)

Beispiel 1 wurde mit der Änderung wiederholt, daß die Verweilzeit des Materials im Tellertrockner 45 Minuten betrug. Charakteristika aus vier Probenahmen des erhaltenen Ammoniumpolyphosphates sind der Tabelle 2 zu entnehmen.

**Tabelle 2**

| Nr. | pH-Wert | Säurezahl mg KOH/g | Wasserlöslicher Anteil % |
|---|---|---|---|
| 5 | 6,5 | 0,13 | 5,0 |
| 6 | 6,4 | 0,18 | 4,8 |
| 7 | 6,4 | 0,16 | 5,1 |
| 8 | 6,5 | 0,14 | 5,0 |

Die Qualität dieses Ammoniumpolyphosphates entspricht der Spezifikation.

### Beispiel 3 (gemäß der Erfindung)

Beispiel 1 wurde mit der Änderung wiederholt, daß die Schichtdicke des Materials auf den Tellern 1o mm und die Verweilzeit des Materials im Tellertrockner 45 Minuten betrugen. Charakteristika aus vier Probenahmen des erhaltenen Ammoniumpolyphosphates sind der Tabelle 3 zu entnehmen.

**Tabelle 3**

| Nr. | pH-Wert | Säurezahl mg KOH/g | Wasserlöslicher Anteil % |
|---|---|---|---|
| 9 | 6,5 | 0,31 | 4,5 |
| 1o | 6,5 | 0,37 | 4,6 |
| 11 | 6,5 | 0,28 | 4,1 |
| 12 | 6,5 | 0,31 | 4,3 |

Die Qualität dieses Ammoniumpolyphosphates entspricht der Spezifikation.

### Beispiel 4 (gemäß der Erfindung)

Beispiel 1 wurde mit der Änderung wiederholt, daß die Schichtdicke des Materials auf den Tellern 15 mm und die Verweilzeit des Materials im Tellertrockner 6o Minuten betrugen. Charakteristika aus vier Probenahmen des erhaltenen Ammoniumpolyphosphates sind der Tabelle 4 zu entnehmen.

**Tabelle 4**

| Nr. | pH-Wert | Säurezahl mg KOH/g | Wasserlöslicher Anteil % |
|---|---|---|---|
| 13 | 6,4 | 0,42 | 4,o |
| 14 | 6,3 | 0,45 | 4,3 |
| 15 | 6,4 | 0,48 | 4,8 |
| 16 | 6,4 | 0,39 | 4,2 |

Die Qualität dieses Ammoniumpolyphosphates entspricht der Spezifikation.

### Beispiel 5 (gemäß der Erfindung)

Beispiel 1 wurde mit der Änderung wiederholt, daß die Schichtdicke des Materials auf den Tellern 15 mm und die Verweilzeit des Materials im Tellertrockner 45 Minuten betrugen. Charakteristika aus vier Probenahmen des erhaltenen Ammoniumpolyphosphates sind der Tabelle 5 zu entnehmen.

**Tabelle 5**

| Nr. | pH-Wert | Säurezahl mg KOH/g | Wasserlöslicher Anteil % |
|---|---|---|---|
| 17 | 6,4 | 0,34 | 4,2 |
| 18 | 6,1 | 0,42 | 5,o |
| 19 | 6,2 | 0,38 | 4,3 |
| 2o | 6,3 | 0,48 | 4,5 |

Die Qualität dieses Ammoniumpolyphosphates entspricht der Spezifikation.

## Patentansprüche

1. Verfahren zur Herstellung von im wesentlichen wasserunlöslichem, kettenförmigem Ammoniumpolyphosphat, wobei in einer ersten Stufe Ammoniumorthophosphat und Phosphorpentoxid in Gegenwart von gasförmigem Ammoniak in einem in seinem Innenraum mit Misch-, Knet- und Zerkleinerungswerkzeugen versehenen Reaktor solange umgesetzt werden, bis der Antriebsmotor des Reaktors in seinem Stromaufnahme-Zeit-Diagramm den zweiten Strompeak durchläuft und wobei in einer zweiten Stufe das aus dem Reaktor ausgeschleuste Material auf einen Tellertrockner aufgegeben wird und dort 35 bis 70 Minuten verweilt, wobei die Heizteller des Tellertrockners auf Temperaturen von 240 - 300 °C gehalten werden, dadurch gekennzeichnet, daß das Material die Teller des Tellertrockners mit einer Schichtdicke von 5 bis 20 mm belegt; daß der untere Kühlteller des Tellertrockners Temperaturen von 5 bis 45 °C aufweist; daß ständig ammoniakhaltiges Gas durch den Tellertrockner geführt wird; daß das aus dem Tellertrockner austretende ammoniakhaltige Gas durch Kondensieren des in ihm enthaltenen Wasserdampfes von diesem befreit wird; daß das ammoniakhaltige Gas vor seinem Eintritt in den Tellertrockner auf Temperaturen von 100 bis 300 °C aufgeheizt wird und daß das Verhältnis der Gesamtoberfläche der Heizteller (in m²) zu der den Tellertrockner durchströmenden Menge ammoniakhaltigen Gases (in m³/h) 1 : (5 bis 15) beträgt.

2. Verfahren nach Anspruch 1, dadurch gekennzeichnet, daß das Material 45 bis 60 Minuten im Tellertrockner verweilt.

3. Verfahren nach Anspruch 1 oder 2, dadurch gekennzeichnet, daß das ammoniakhaltige Gas im Querstrom durch den Tellertrockner geführt wird.

4. Verfahren nach Anspruch 1 oder 2, dadurch gekennzeichnet, daß das ammoniakhaltige Gas im Gegenstrom durch den Tellertrockner geführt wird.

5. Verfahren nach Anspruch 1 oder 2, dadurch gekennzeichnet, daß das ammoniakhaltige Gas im Gleichstrom durch den Tellertrockner geführt wird.

6. Verfahren nach mindestens einem der Ansprüche 1 bis 5, dadurch gekennzeichnet, daß dem vom Wasserdampf befreiten ammoniakhaltigen Gas zusätzlich Ammoniak beigemischt wird.

7. Verfahren nach einem der Ansprüche 1 bis 6, dadurch gekennzeichnet, daß das Verhältnis 1 : (8 bis 12) beträgt.

## Claims

1. A process for the preparation of essentially water-insoluble, long-chain ammonium polyphosphate, where, in a first stage, ammonium orthophosphate and phosphorus pentoxide are reacted in the presence of gaseous ammonia in a reactor equipped in its interior with mixing, kneading and comminution apparatus, until the drive motor of the reactor passes through the second current peak in its current consumption/time diagram, and, in a second stage, the material discharged from the reactor is fed to a disk dryer and remains there for 35 to 70 minutes, the heating disks of the disk dryer are held at temperatures of 240-300°C, wherein the material covers the disks of the disk dryer to a layer thickness of 5 to 20 mm; the lower cooling disk of the disk dryer has temperatures of 5 to 45°C; ammonia-containing gas is continuously passed through the disk dryer; the ammonia-containing gas exiting the disk dryer is freed from water vapor contained therein by condensation; the ammonia-containing gas is heated prior to its entry into the disk dryer to temperatures of 100 to 300°C and the ratio of the total surface area of the heating disks (in m²) to the amount of ammonia-containing gas flowing through the disk dryer (in m³/h) is 1 : (5 to 15).

2. The process as claimed in claim 1, wherein the material has a residence time of 45 to 60 minutes in the disk dryer.

3. The process as claimed in claim 1 or 2, wherein the ammonia-containing gas is passed in cross-current flow through the disk dryer.

4. The process as claimed in claim 1 or 2, wherein the ammonia-containing gas is passed in counter-current flow through the disk dryer.

5. The process as claimed in claim 1 or 2, wherein the ammonia-containing gas is passed in co-current flow through the disk dryer.

6. The process as claimed in at least one of claims 1 to 5, wherein ammonia is additionally admixed to the ammonia-containing gas freed from water vapor.

7. The process as claimed in any one of claims 1 to 6, wherein the ratio is 1 : (8 to 12).

## Revendications

1. Procédé de préparation de polyphosphate d'ammonium en forme de chaîne essentiellement insoluble dans l'eau, où dans une première étape on fait réagir de l'orthophosphate d'ammonium et du pentoxyde de phosphore en présence d'ammoniac gazeux dans un réacteur muni à l'intérieur d'appareils de mélange, de malaxage et de broyage jusqu'à ce que le moteur d'entraînement du réacteur passe par le deuxième pic d'intensité dans son diagramme prise d'intensité en fonction du temps et où dans une deuxième étape on place le matériau évacué du réacteur dans un sécheur à plateaux et on l'y laisse 35 à 70 min, où les plateaux chauffants du sétheur à plateaux sont maintenus à une température de 240-300°C, caractérisé en ce que le matériau recouvre les plateaux du sécheur à plateaux avec une épaisseur de couche de 5 à 20 mm ; que le plateau inférieur refroidisseur du sécheur à plateaux présente des températures de 5 à 45°C; qu'on introduit en permanence du gaz contenant de l'ammoniac dans le sécheur à plateaux, qu'on élimine la vapeur d'eau du gaz contenant de l'ammoniac sortant du sécheur à plateaux par condensation; qu'on chauffe le gaz contenant de l'ammoniac avant son entrée dans le sécheur à plateaux à des températures de 100 à 300°C et que le rapport de la surface totale des plateaux chauffants (en m²) à la quantité de gaz contenant de l'ammoniac traversant le sécheur à plateaux (en m³/h) est 1:(5 à 15).

2. Procédé selon la revendication 1, caractérisé en ce que le matériau reste 45 à 60 min dans le sécheur à plateaux.

3. Procédé selon la revendication 1 ou 2, caractérisé en ce que l'on introduit le gaz contenant de l'ammoniac en courant transversal dans le sécheur à plateaux.

4. Procédé selon la revendication 1 ou 2, caractérisé en ce que l'on introduit le gaz contenant l'ammoniac à contre-courant dans le sécheur à plateaux.

5. Procédé selon la revendication 1 ou 2, caractérisé en ce que l'on introduit le gaz contenant de l'ammoniac dans le même sens dans le sécheur à plateaux.

6. Procédé selon au moins l'une des revendications 1 à 5, caractérisé en ce que l'on mélange en plus à l'ammoniac le gaz contenant de l'ammoniac débarrassé de la vapeur d'eau .

7. Procédé selon l'une des revendications 1 à 6, caractérisé en ce que le rapport est 1:(8 à 12).
